Europäisches Patentamt

European Patent Office

Office européen des brevets

(19)

(11) **EP 1 273 413 A1**

(12) # EUROPEAN PATENT APPLICATION

(43) Date of publication:
**08.01.2003 Bulletin 2003/02**

(51) Int Cl.$^7$: **B29B 9/08**, C08J 3/12

(21) Application number: **01202536.7**

(22) Date of filing: **02.07.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **ATOFINA Research Société Anonyme 7181 Seneffe (Feluy) (BE)** | (72) Inventors:<br>• **Detournay, Patrick**<br>  **1325 Chaumont-Gistoux (BE)**<br>• **Van Sinoy, Alain**<br>  **1083 Ganshoren (BE)**<br>• **Stevens, Peter**<br>  **2640 Mortsel (BE)**<br>• **Albe, Lisa**<br>  **1421 Ophain-Bois-Seigneur Isaac (BE)** |

(54) **High density polyethylene fluff compaction**

(57)     This invention discloses a process for agglomerating a fluff comprising one or more polymer(s), optional fines, and optional additives, said fluff having a high load melt index (HLMI) of from 0.1 to 20 g/10 min, by submitting said fluff to a mechanical force under a temperature sufficient to soften and deform the polymer grains.

EP 1 273 413 A1

**Description**

The field of this invention is a method of agglomerating polymers and fines that does not degrade the material.

In several applications, it is desired to obtain material that is substantially free of fine powders as these fine powders are a hazard to health and render the material difficult and slow to process because of their irregularities. These fine powders or "fines" are defined here as polymer particles having a diameter of less than 125 microns: they are unavoidable and are produced as a byproduct during polymerisation. The suppression of fines was successfully achieved by extrusion of the fluff to produce pellets thereby allowing high feed rate in downstream equipment: a 10 to 30 % increase in the throughput has been observed with pelletised material.

That method however presents several drawbacks:

- it requires extrusion capability thereby increasing the cost, and
- most importantly, it degrades the properties of the material, such as the melt flow index and the dynamic rheology, especially in the case of high molecular weight polyethylene.

It is believed that the shear forces are responsible for the degradation of the extruded material.

A compaction method has been disclosed in U.S. 5,393,473. That application discloses the compaction of ultra-high molecular weight polyethylene, alone or as a mixture with other polyethylene. The compaction machine has a die geometry that allows good density of the compacted pellets. In addition, the polyethylene, being produced with a Ziegler-Natta catalyst, shows little degradation as expected.

The compaction method and equipment are disclosed for example in several patents to Amandus Kahl:

- DE-3344044 that discloses an additional step of precompaction before the actual compaction step;
- DE-3432780 that discloses a method for wetting the material during compaction;
- DE-3806945 that discloses a compaction method using at least two motors in order to reduce the friction.

It is known that fluff of high density polyethylene produced with a chromium catalyst or a metallocene catalyst degrades easily when mechanically extruded to form pellets; there is thus a need to produce these materials under a less degraded form.

These problems have now been overcome by the present invention that discloses a process for agglomerating polymer fluffs and polymer fines.

It is an object of the present invention to provide a process for agglomerating polymers and fines into agglomerates that show substantially reduced level of material degradation over the extruded pellets.

It is another aim of the present invention to improve the feeding rate of material in downstream equipment, with respect to fluffs and fines.

It is yet another object of the present invention to reduce the energy consumption required for production of the pellets from fluffs and fines.

It is a further aim of the present invention to reduce the health hazard associated with the presence of fines in the fluff exiting the reactor by providing the material in agglomerated form.

The present invention provides a process for agglomerating a fluff comprising one or more polymer(s), optionally, one or more polymer fines and optional additives, said fluff having a high load melt index (HLMI) of from 0.1 to 20 g/10 min, and preferably from 0.1 to 10 g/10 min, by submitting said fluff to a mechanical force at a temperature sufficient to soften and deform the polymer grains.

A fluff is defined here as the distribution of polymer grains exiting the reactor.

The optional additives are pigments, fillers, colorant or any other usual additive.

The resulting agglomerated polymer pellets are substantially free of degradation.

The polymers present in the fluff can be selected from polyethylene, polypropylene, PVC and polystyrene. Preferably, one polymer is an olefin, more preferably, it is polyethylene, and most preferably it is high molecular weight, high-density polyethylene.

Preferably, the polymer fluff comprises from 80 to 100 wt% of a first high molecular weight high-density polyethylene, prepared by Ziegler- Natta or chromium or metallocene catalysis, but preferably prepared by chromium or metallocene catalysis, and from 20 to 0 wt% of a second polyethylene of low or medium density prepared by any method known in the art, but preferably prepared by metallocene catalysis.

The temperature of the agglomerated polymer pellets, as measured immediately after exiting the compactor, is of from 100 to 150 °C, and preferably of from 110 to 125 °C. In the preferred embodiment of the present invention, wherein the polymer fluff comprises from 80 to 100 wt% of a first high molecular weight high-density polyethylene and from 20 to 0 wt% of a second polyethylene of low or medium density, the temperature of the agglomerated pellets is from at least 115 °C up to 125 °C.

The polyethylene fluff, used in the preferred embodiment of the present invention, has a density of from 0.94 to 0.97g/cm$^3$ as measured at 23 °C following the method of standard test ASTM D 1505. The high load melt index (HLMI) is of from 0.1 to 20 g/10 min and preferably from 0.1 to 10 g/10 min, as measured at 190 °C following the method of standard test ASTM D 1238 under a load of 21.6 kg. The weight average molecular weight is in the range of 200,000 to 400,000. The polyethylene fluff can be selected to be suitable for blow moulding, or for injection moulding, or for roto-moulding.

A number of different catalyst systems have been disclosed for the manufacture of polymers in general, and of high molecular weight, high-density polyethylene. It is known in the art that the physical properties, in particular the mechanical properties, of a polymer or of a polyethylene product vary depending on what catalytic system was employed for its preparation. This is because different catalyst systems tend to yield different molecular weight distributions and different molecular structures in the polymer produced.

It is known to employ a chromium-based catalyst (*i.e.* a catalyst known in the art as a "Phillips catalyst"). Such a chromium-based catalyst enables the production of polyethylene having desirable physical and rheological properties. Chromium-based catalysts can be used to polymerise HDPE and in particular to produce high density polyethylene having high resistance to environmental stress cracking. For example, EP-A-0,291,824, EP-A-0,591,968 and US-A-5,310,834 each disclose mixed catalyst compositions, incorporating chromium-based catalysts, for the polymerisation of polyethylene. The chromium-based catalyst can be tailored to prepare polymers having specific properties: it can be supported on an inorganic support and undergo various treatments such as titanation, reduction and/or activation.

The HDPE can also be polymerised with a metallocene catalyst capable of producing a mono- or bi- or multimodal distribution, either in a two step process such as described for example in EP-A-0,881,237, or as a dual or multiple site catalyst in a single reactor such as described for example in EP-A-0,619,325.

Any metallocene catalyst known in the art can be used in the present invention. It is represented by the general formula:

$$\text{I.} \qquad (Cp)_m MR_n X_q$$

wherein Cp is a cyclopentadienyl ring, M is a group 4b, 5b or 6b transition metal, R is a hydrocarbyl group or hydrocarboxy having from 1 to 20 carbon atoms, X is a halogen, and m=1-3, n=0-3, q=0-3 and the sum m+n+q is equal to the oxidation state of the metal.

$$\text{II.} \qquad (C_5 R'_k)_g R''_s (C_5 R'_k) MQ_{3-g}$$

$$\text{III.} \qquad R''_s (C_5 R'_k)_2 MQ'$$

wherein $(C_5 R'_k)$ is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring, R" is a $C_1$-$C_4$ alkylene radical, a dialkyl germanium or silicon or siloxane, or a alkyl phosphine or amine radical bridging two $(C_5 R'_k)$ rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1 and k is 5 when s is 0, and M is as defined above.

The metallocene may be supported and an active site must be created by adding a cocatalyst having an ionising action. Preferably, alumoxane is used as cocatalyst during the polymerization procedure, and any alumoxane known in the art is suitable. Alternatively, one or more aluminiumalkyl may be used as cocatalysts.

The density of polyethylene is regulated by the amount of comonomer injected into the reactor during the polymerisation procedure. Examples of comonomer which can be used include 1-olefins butene, hexene, octene, 4-methyl-pentene, and the like, the most preferred being hexene. The densities of polyethylene used in the preferred embodiment of the present invention range from 0.940 g/cm$^3$ to 0.970 g/cm$^3$.

The melt index of the metallocene polyethylene is regulated by the amount of hydrogen injected into the reactor. The melt indices useful in the present invention range from 0.1 g/10min to 20 g/10 min, and preferably from 0.1 to 10 g/10 min.

Alternatively, the HDPE can be produced using a conventional Ziegler-Natta catalyst or a supported Ziegler-Natta catalyst comprising metallocene sites such as described for example in EP-A-0,585,512.

In another preferred embodiment of the present invention, the high molecular weight, high-density polyethylene is blended with another polyethylene of low, or medium molecular weight prepared with any catalyst system.

Preferably, it is blended with a medium molecular weight metallocene polyethylene. The metallocene polyethylene resin used in the present invention can be prepared with either a single site metallocene catalyst or with a multiple site metallocene catalyst and it has therefore either a monomodal or a multimodal molecular weight distribution. The molecular weight distribution is of from 2 to 20, preferably, of from 2 to 7 and more preferably of from 2 to 5.

The material prepared from the fluff of one or more polymer(s), the fines and optional additives, is then cycled through the compactor. Preferably, it is cycled only once through the compactor but it may be cycled more than once if desirable, thereby allowing for a longer time spent under pressure and for a higher heat build up. The agglomeration procedure does not produce polymer granules with suitably low level of attrition if the operational temperature is too low. It is nevertheless desirable to maintain the temperature as low as possible during compaction in order to avoid extensive melting of the material. Indeed, if the material melts extensively, it acts like glue that builds up on the walls of the compactor. The necessary level of temperature varies with the nature of the polymer: it is defined here as the temperature at which the external surface of the polymer grains in the fluff starts softening. For the preferred high molecular weight high-density polyethylene of the present invention a minimum temperature of 115 °C is necessary in order to produce granules that resist attrition after a single cycle through the compactor.

The die hole diameter of the compactor can be adjusted by changing the die plate depending on the desired diameter of the agglomerated pellets: it varies from 2 to 5 mm and is preferably about 3 mm. The land length of the die holes can also be adjusted in order to alter the residence time and hence the hardness of the pellets. It is of from 10 mm to 30 mm. The ratio between diameter and length of the die must be adjusted for optimal agglomeration conditions and is preferably of from 1:4 to 1:10, most preferably from 1:5 to 1:7.

Additives can be used as binders but the degree of compaction is not substantially improved by such addition. The polymer and fines can thus advantageously act as their own binder and the resulting agglomerated product is therefore not degraded during the compaction process.

The low and very low density density polyethylene (LDPE and VLDPE) and the metallocene linear low density polyethylene (mLLDPE) are known to have a low melting point and they can also be used as binders: very small amounts of less than 5 wt% are necessary.

Additionally, fines, defined here as particles having a diameter of less than 125 microns, can be used as binders in the agglomeration procedure. They can originate from the same HDPE as that used in the compaction procedure or they can come from another HDPE. Preferably, they originate from the same HDPE. Small amounts of less than 5 wt% are necessary.

If fines originating from other polyethylenes are used as binder they do not need to be produced by the same polymerisation method as that of the polyethylene to be compacted. Preferably, the fines are of the same material as the material to be agglomerated and are produced in situ during the polymerisation procecedure.

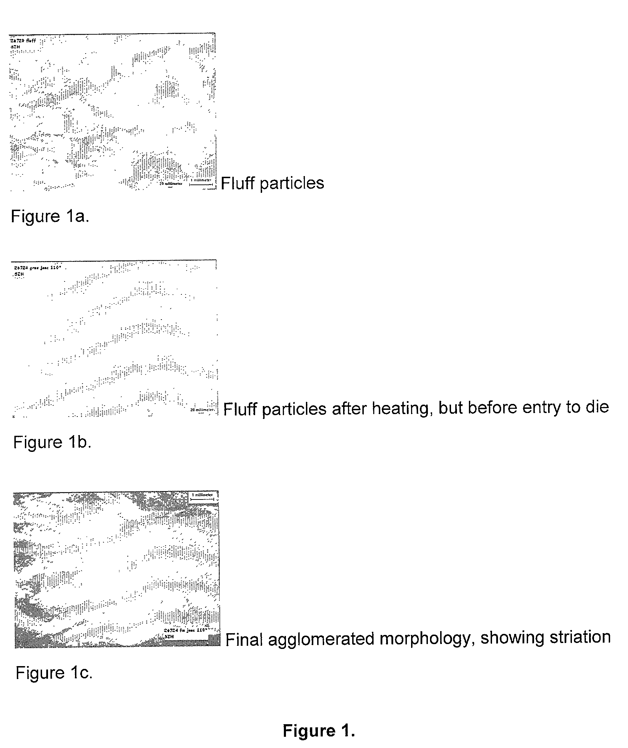

It has been observed with an electronic microscope that, at temperatures higher than 110 °C, the grains undergoing shear during the agglomeration process, deform progressively to form a striated morphology aligned in the direction of shear. This is displayed in Figure 1, representing respectively microscope photographs of fluff particles before compaction (Figure 1a), after heating but before entry to die (Figure 1b), and after agglomeration (Figure 1c). The improved cohesion is a consequence of the striated morphology.

The polymer pellets obtained by the present agglomeration method were tested for degradation. Very little degradation is observed as evidenced by melt flow index measurements, antioxidant consumption, dynamic rheology and molecular weight as measured by gel permeation chromatography.

The dynamic rheology is measured using the method of the rheological dynamic analysis. It is a measure of the resistance to flow of material placed between two parallel plates rotating with respect to each other with an oscillatory motion. The apparatus comprises a motor that transmits a sinusoidal deformation to the sample. The sample then transmits the resulting constraint, said resulting constraint being also sinusoidal. The material to be studied can be a solid attached between two anchoring points or it can be melted between the two plates. The dynamic rheometer allows the simultaneous measurement of both the elastic modulus and the viscous modulus of the material. Indeed, the resulting sinusoidal constraint is displaced by a phase angle $\delta$ with respect to the imposed deformation and it is mathematically possible to decompose the resulting sinusoid into:

- a first sinusoid in phase with the initial deformation that represents the elastic component of the material. Said component conserves energy.
- a second sinusoid displaced by a phase angle of $\pi/2$ with respect to the initial deformation that represents the viscous component. Said component dissipates energy into heat.

The initial deformation is represented by the formula

$$\gamma = \gamma_0 \sin(\omega t)$$

wherein $\omega$ is the frequency.
The resulting constraint is thus of the form

$$\tau = \tau_0 \sin (\omega t + \delta)$$

The complex modulus is given by the formula

$$G = \tau/\gamma$$

The complex modulus can be decomposed into the elastic modulus G' and the viscous modulus G" defined respectively as

$$G' = G \cos (\delta)$$

and

$$G" = G \sin(\delta)$$

The complex viscosity is defined as G / $\omega$.
At constant temperature and constant deformation amplitude, G' and G" can be measured for different values of $\omega$. The measurements were carried out under the following operating conditions:

- a constant operating temperature of 190 °C,
- parallel plates separated by 1.5 mm,
- constant deformation maintained at 10%.

The elastic component G' and the viscous component G" are graphed as a function of frequency $\omega$. The point of intersection between the elastic and viscous curves, called the cross-over point (COP), is characterised by a frequency $\omega_c$ and a viscosity component $G_c$. The cross-over point is characteristic of each polymer and is a function of the molecular weight and of the molecular distribution.

As the main degradation mechanisms are radical processes, the antioxidant consumption is a measure of the level of degradation.

The quality of compaction is measured by the attrition test developed internally. The samples are divided into N equal parts over a sample divider. Each part is then re-mixed during 5 minutes in a small laboratory tumbling mixer. The attrition test is then performed twice on each part as follows.

- Using a standard vibrating sieve analysis equipment (Fritsch- Retch) with a sieve having square apertures of 1600 microns, the weight % of material lost through the sieve is determined after 3, 10 and 30 minutes.
- The severity of the impact and therefore of the attrition conditions can be altered by adding 10 spherical balls.
- The severity of the impact and therefore of the attrition can be fine-tuned by varying the density, the nature and the number of the spherical balls.
  The present test has been performed with 10 spherical balls of Zirconium oxide having a diameter of 8 mm.
- The degree of attrition of the material is represented by the slope of the curve representing the percentage of weight loss as a function of vibration time.

As will be seen in the examples, the degree of attrition is and remains much smaller for the material that has been cycled through the compactor under a high temperature, than for the material cycled once at lower temperature.

**Examples.**

Two starting fluff materials have been compacted:

- a pure high molecular weight high-density polyethylene (HDPE) having a HLMI of 2.2 g/10 min and a density of 0.953 g/cm$^3$, and produced by chrome catalysis stabilised with an antioxidant package,

- a blend of 90 wt% of the same high molecular weight high-density polyethylene and 10 wt% metallocene polyethylene (HDPE+mPE) having a HLMI of 26 g/10 min and a density of 0.934 g/cm$^3$. The blend was obtained by dry blending without additional additivation.

The machine and compacting conditions are displayed in Table 1. The temperatures were measured immediately after compaction when exiting the compactor. In order to successfully compact the HDPE+mPE blend, the blend material had to be recycled once through the compactor, allowing therefore for a longer time under pressure and heat build up. The compaction as a result is improved and the percentage of attrition observed for the multi-pass material is accordingly very low as can be seen in Table 2.

Table 1.

|  |  | HDPE | HDPE+mPE |
|---|---|---|---|
| Feed to compactor |  | fluff | Fluff +recycled compacred product |
| Throughput | Kg/h | 192 | 156 |
| Compacting conditions |  |  |  |
| Die hole | Mm | 3 | 3 |
| Length | Mm | 18 | 18 |
| Temperature pellets | °C | 105-110 | 116-120 |
| Speed | Rpm | 820 | 820 |
| Intensity | A | 50 | n.a. |
| Torque | % | 90 | 76 |
| Hydraulic pressure | Bar | 60 | 55 |

Table 2.

|  |  | HDPE | HDPE+mPE |
|---|---|---|---|
| Temperarure pellets | °C | 105-110 | 116-120 |
| Attrition |  |  |  |
| 3 minutes | wt% | 19.9 | 1.8 |
| 10 minutes | wt% | 73.1 | 5.1 |
| 30 minutes | wt% | 98.0 | 12.3 |

The properties of the two types of compacted pellets obtained here-above have been compared with those of the HDPE fluff, HDPE+mPE fluff, mPEfluff and with the properties of the extruded pellets. These properties, as displayed in Table 3, have the following meaning:

- Mn is the number average molecular weight
- Mw is the weight average molecular weight
- Mz is the "z average" molecular weight
- D is the ratio Mw/Mn and represents a measure of the molecular weight distribution,
- RDA $\omega_c$ represents the frequency of the cross-over point between the elastic and viscous viscosity curves, and
- RDA $G_c$ represents the viscosity at the cross-over point between the elastic and viscous viscosity curves.

Table 3.

|  | Fluff HDPE | Fluff mPE | Fluff HDPE+ MPE | Agglom. HDPE | Agglom. HDPE+ mPE | Pelletised HDPE Lab. | Pelletised HDPE Plant |
|---|---|---|---|---|---|---|---|
| GPC |  |  |  |  |  |  |  |

Table 3.  (continued)

| | Fluff HDPE | Fluff mPE | Fluff HDPE+ MPE | Agglom. HDPE | Agglom. HDPE+ mPE | Pelletised HDPE Lab. | Pelletised HDPE Plant |
|---|---|---|---|---|---|---|---|
| Mn | 24600 | 31300 | 24700 | 25500 | 26100 | 24700 | 26000 |
| Mw | 284000 | 80600 | 260000 | 329000 | 293000 | 324000 | 330000 |
| Mz | 2150000 | 158000 | 1670000 | 1780000 | 2450000 | 2550000 | 2540000 |
| D | 11.5 | 2.6 | 10.5 | 12.9 | 11.2 | 13.1 | 12.6 |
| Antioxid. | | | | | | | |
| Loss % | 0.0 | 0.0 | 0.0 | 11.5 | +/-4.7[a] | 11.0 | 32.6 |
| HLMI g/10min | 2.2 | 25.5 | 3.5 | 2.6 | 3.3 | 1.7 | 1.6 |
| Change % | 0 | 0 | 0 | 0.4 | -0.2 | -0.5 | -0.6 |
| Rheology-RDA | | | | | | | |
| RDA-COP $\Omega$, sec$^{-1}$ | 0.4 | 223.8 | 1.2 | 0.4 | 0.6 | 0.3 | 0.1 |
| RDA-COP Gc, sec$^{-1}$ | 21030 | 170600 | 31530 | 22560 | 24920 | 19900 | 15350 |

[a] It must be noted that the sensitivity of the chromatography test used for this measurement is of +/-5%.

As can be seen from the HLMI measurements, the compacted material is not degraded by the compaction and it keeps its HLMI, contrary to the extruded material that has a much smaller HLMI value.

The dynamic rheology test also exhibits a low degree of degradation for the agglomerated material in clear contrast with the extruded pellets prepared either with the laboratory polyethylene or with the plant polyethylene.

The agglomerated fluff is suitable for many applications such as large barrels for carrying dangerous cargo, jerricans, drums or intermediate bulk containers (IBC).

It is also suitable to reduce the health hazard caused by the presence of fines.

**Claims**

1.    A process for agglomerating a fluff comprising one or more polymer(s), optional fines, and optional additives, said fluff having a high load melt index (HLMI) of from 0.1 to 20 g/10 min, by submitting said fluff to a mechanical force under a temperature sufficient to soften and deform the polymer grains.

2.    The process according to claim 1 wherein the fluff comprising one or more polymer(s) is a fluff comprising one or more polyolefin(s).

3.    The process of claim 2, wherein the fluff comprising one or more polyolefin(s) is a blend of 80 to 100 wt% of high molecular weight high-density polyethylene and 20 to 0 wt% of a low or medium molecular weight polyethylene.

4.    The process of claim 3, wherein the high molecular weight high-density polyethylene is prepared with a chromium or a metallocene catalyst.

5.    The process of claim 3 wherein the low or medium molecular weight polyethylene is a medium molecular weight metallocene polyethylene.

6.    The process according to any one of the preceding claims wherein the HLMI is of from 0.1 to 10 g/10 min.

7.    The process according to any one of the preceding claims wherein the temperature of the agglomerated pellets exiting the compactor is of from 110 to 150 °C.

8.    The process of claim 7 wherein the temperature of the agglomerated pellets exiting the compactor is of from 115 to 125 °C.

9.  Use of the fines produced in situ during polymerisation to bind the polymer grains during the agglomeration process of any one of the preceding claims.

10. The fine-free agglomerated polymer pellets obtainable by the process according to any one of claims 1 to 7.

11. The fine-free agglomerated pellets of claim 9, wherein the polymer is a blend of from 80 to 100 wt% of high molecular weight high-density polyethylene and of from 20 to 0 wt% of a low or medium molecular weight polyethylene.

12. Use of the agglomeration process of any one of claims 1 to 7 to reduce the degradation level of pelletised polymers.

13. Use of the agglomeration process of any one of claims 1 to 7 to reduce the health hazard associated with the presence of fines.

14. A polyethylene article prepared with the fine-free agglomerated polyethylene pellets of claim 9 or claim 10.

Fluff particles

Figure 1a.

Fluff particles after heating, but before entry to die

Figure 1b.

Final agglomerated morphology, showing striation

Figure 1c.

**Figure 1.**

**European Patent Office**

**EUROPEAN SEARCH REPORT**

Application Number

EP 01 20 2536

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 5 393 473 A (PAYER WOLFGANG ET AL) 28 February 1995 (1995-02-28) * column 1-2; claim 1; example 6 * | 1-14 | B29B9/08 C08J3/12 |
| X | EP 0 904 908 A (GEN ELECTRIC) 31 March 1999 (1999-03-31) * page 6-9; figure 1; table II * | 1,2, 6-10,12, 13 | |
| X | EP 0 152 107 A (PLUSS STAUFFER AG) 21 August 1985 (1985-08-21) * page 2-4; claims 1,6; example 4 * | 1,2,6, 10,12-14 | |
| X | WO 85 04365 A (HOECHST CO AMERICAN) 10 October 1985 (1985-10-10) * page 1-2 * * page 14-15 * | 1,2,4, 6-10, 12-14 | |
| X | US 5 484 620 A (OECHSLE DIETMAR ET AL) 16 January 1996 (1996-01-16) * column 2, line 7-65; claims 1,5,15 * | 1,2,7,8, 10,12-14 | TECHNICAL FIELDS SEARCHED (Int.Cl.7) B29B C08J |
| A | US 5 468 809 A (GHISELLINI RENATO ET AL) 21 November 1995 (1995-11-21) see abstract | 1-14 | |

The present search report has been drawn up for all claims

| Place of search | Date of completion of the search | Examiner |
|---|---|---|
| MUNICH | 16 October 2001 | Kofoed, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 1 273 413 A1

### ANNEX TO THE EUROPEAN SEARCH REPORT
### ON EUROPEAN PATENT APPLICATION NO.

EP 01 20 2536

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2001

| Patent document cited in search report | | Publication date | Patent family member(s) | | Publication date |
|---|---|---|---|---|---|
| US 5393473 | A | 28-02-1995 | DE | 4210351 A1 | 07-10-1993 |
| | | | BR | 9301345 A | 05-10-1993 |
| | | | JP | 2098444 C | 02-10-1996 |
| | | | JP | 6015641 A | 25-01-1994 |
| | | | JP | 8005056 B | 24-01-1996 |
| | | | NL | 9300519 A | 18-10-1993 |
| EP 0904908 | A | 31-03-1999 | CN | 1212920 A | 07-04-1999 |
| | | | EP | 0904908 A1 | 31-03-1999 |
| | | | JP | 11254428 A | 21-09-1999 |
| | | | SG | 70124 A1 | 25-01-2000 |
| EP 0152107 | A | 21-08-1985 | DE | 3405185 A1 | 14-08-1985 |
| | | | EP | 0152107 A2 | 21-08-1985 |
| | | | ZA | 8500947 A | 30-10-1985 |
| WO 8504365 | A | 10-10-1985 | CA | 1247795 A1 | 27-12-1988 |
| | | | DE | 3580331 D1 | 06-12-1990 |
| | | | EP | 0175769 A1 | 02-04-1986 |
| | | | JP | 5033643 B | 20-05-1993 |
| | | | JP | 61501695 T | 14-08-1986 |
| | | | WO | 8504365 A1 | 10-10-1985 |
| US 5484620 | A | 16-01-1996 | DE | 4125594 A1 | 25-06-1992 |
| | | | AT | 132054 T | 15-01-1996 |
| | | | BR | 9106239 A | 30-03-1993 |
| | | | CA | 2076745 A1 | 23-06-1992 |
| | | | DE | 59107162 D1 | 08-02-1996 |
| | | | WO | 9211085 A1 | 09-07-1992 |
| | | | EP | 0515585 A1 | 02-12-1992 |
| | | | ES | 2082229 T3 | 16-03-1996 |
| | | | JP | 5504510 T | 15-07-1993 |
| US 5468809 | A | 21-11-1995 | IT | 1254213 B | 14-09-1995 |
| | | | IT | 1254214 B | 14-09-1995 |
| | | | AT | 184038 T | 15-09-1999 |
| | | | AU | 662202 B2 | 24-08-1995 |
| | | | AU | 3311693 A | 26-08-1993 |
| | | | BR | 9300655 A | 31-08-1993 |
| | | | CA | 2090250 A1 | 25-08-1993 |
| | | | CN | 1076461 A | 22-09-1993 |
| | | | DE | 69326174 D1 | 07-10-1999 |
| | | | DE | 69326174 T2 | 16-03-2000 |
| | | | EP | 0557953 A1 | 01-09-1993 |
| | | | ES | 2137202 T3 | 16-12-1999 |
| | | | FI | 930817 A | 25-08-1993 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 01 20 2536

This annex lists the patent family members relating to the patent documents cited in the above–mentioned European search report.
The members are as contained in the European Patent Office EDP file on
The European Patent Office is in no way liable for these particulars which are merely given for the purpose of information.

16-10-2001

| Patent document cited in search report | Publication date | Patent family member(s) | Publication date |
|---|---|---|---|
| US 5468809 A | | JP 6087991 A | 29-03-1994 |
| | | KR 253014 B1 | 15-04-2000 |
| | | MX 9300938 A1 | 31-08-1994 |
| | | NO 930637 A | 25-08-1993 |
| | | RU 2110536 C1 | 10-05-1998 |

EPO FORM P0459

For more details about this annex : see Official Journal of the European Patent Office, No. 12/82